# EUROPÄISCHE PATENTSCHRIFT

(11) **EP 2 282 900 B1**
(45) Veröffentlichungstag und Bekanntmachung des Hinweises auf die Patenterteilung: **05.03.2014**
(21) Anmeldenummer: 09729943.2
(22) Anmeldetag: 25.03.2009
(51) Int. Cl.: B60G 3/14, B60G 7/00, B60G 21/05

(54) **GEGENLENKENDE FAHRZEUG-HINTERACHSE**
COUNTERSTEERING AUTOMOTIVE REAR AXLE
ESSIEU ARRIÈRE DE VÉHICULE MOTORISÉ À SENS DE BRAQUAGE OPPOSÉ AU SENS DE BRAQUAGE DE L'ESSIEU AVANT

(30) Priorität: 07.04.2008 DE 102008001030
(43) Veröffentlichungstag der Anmeldung: 16.02.2011
(73) Patentinhaber: Bayerische Motoren Werke Aktiengesellschaft, 80809 München (DE)
(72) Erfinder: JAKOB, Benjamin, 80807 München (DE)
(86) Internationale Anmeldenummer: PCT/EP2009/002158
(87) Internationale Veröffentlichungsnummer: WO 2009/124658

(56) Entgegenhaltungen:
- EP-A- 2 019 023
- DE-A1- 10 321 877
- FR-A- 2 860 751
- FR-A- 2 902 698
- US-B1- 6 173 977

## Beschreibung

Die Erfindung betrifft eine gegenlenkende Fahrzeug-Hinterachse, die unter Einwirkung einer Seitenkraft auf das an einem Radträger befestigte kurvenäußere Rad eine Drehbewegung dieses Radträgers um eine virtuelle Spreizachse in Richtung Vorspur veranlasst, wobei der Radträger über Stützelemente an einem sich im wesentlichen in Fahrzeug-Längsrichtung erstreckenden Achskörper abgestützt ist. Zum bekannten Stand der Technik wird beispielshalber auf die DD 281 154 A5 sowie auf die DE 103 21 877 B4 verwiesen.

Es ist bekannt, dass einfache Fahrzeug-Hinterachsen insbesondere der Verbundlenker-Bauart, aber auch der Längslenker- und Schräglenker-Bauart unter Seitenkrafteinfluss eine Übersteuertendenz aufweisen können. Aus dem genannten Stand der Technik sind weiterhin bereits Abhilfemaßnahmen hiergegen bekannt. So zeigt die zweitgenannte DE 103 21 877 B4 eine Radträgerlagerung mit einer sog. Pendelplatte, in der vier elastische Schwenklager integriert sind. Mit dieser äußerst aufwändigen Konstruktion wird unter Seitenkrafteinfluss das kurvenäußere Rad in Vorspur und das kurveninnere Rad in (Richtung) Nachspur gelenkt, wodurch die Achse stabilisierend wirkt. Gleiches erfolgt bei einer konstruktiv erheblich einfacheren sog. gegenlenkenden Hinterachse nach der erstgenannten DD 281 154 A5, jedoch dürfte die Betriebsfestigkeit eines dort vorgesehenen plattenförmigen Federelementes, welches den Radträger trägt, zu wünschen übrig lassen.

Vorliegend soll daher eine relativ einfach bauende sog. gegenlenkende Hinterachse nach dem Oberbegriff des Anspruchs 1 aufgezeigt werden, die den allgemeinen Festigkeitsanforderungen von Fahrzeugachsen (beispielsweise für PKW) genügt (= Aufgabe der vorliegenden Erfindung).

Die Lösung dieser Aufgabe ist dadurch gekennzeichnet, dass oberhalb und unterhalb des Radmittelpunktes jeweils zwei torsionsweiche aber biegesteife Stützelemente vorgesehen sind, die in einer seitlichen Projektion wie die virtuelle Spreizachse im wesentlichen gleichermaßen gegenüber der Vertikalrichtung geneigt sind, wobei ein oberes, sich im wesentlichen in Fahrzeug-Querrichtung nach innen erstreckendes Anbindungs-Stützelement einerseits am Radträger und andererseits an einem oberen Torsions-Stützelement, das mit seinem anderen Ende am Achskörper abgestützt ist, abgestützt ist, während ein unteres, sich im wesentlichen in Vertikalrichtung erstreckendes Anbindungs-Stützelement einerseits am Radträger und andererseits an einem unteren Torsions-Stützelement, das mit seinem anderen Ende am Achskörper abgestützt ist, abgestützt ist. Vorteilhafte Ausund Weiterbildungen sind Inhalt der Unteransprüche.

Vorgeschlagen ist somit, den Radträger über zumindest vier Stützelemente am Achskörper, bei dem es sich beispielsweise um das Längsrohr eines Verbundlenkers oder allgemein um einen Lenker (Längslenker oder Schräglenker) der Radaufhängung handeln kann, abzustützen. Jedes dieser Stützelemente ist im wesentlichen biegesteif aber torsionsweich ausgebildet. Hinsichtlich am Rade bzw. am Radträger angreifender Längskräfte sowie Vertikalkräfte ist aufgrund der Biegesteifheit dieser wie angegeben angeordneten Stützelemente eine ausreichend betriebsfeste Abstützung gewährleistet. Aufgrund der Torsionsweichheit dieser Elemente ist jedoch ein gewünschtes geringfügiges Verdrehen des Rades bzw. Radträgers unter Seitenkrafteinfluss um eine im wesentlichen durch diese Stützelemente bzw. deren Schubmittelpunkte, worauf im folgenden noch weiter eingegangen wird, gebildete Spreizachse (auch Lenkachse genannt) möglich. Dabei ist eine Anordnung mit vier solchen Stützelementen, die jeweils durch geeignet geformte Längsprofile gebildet sind, baulich erheblich einfacher als bspw. die aus der eingangs genannten DE 103 21 877 B4 bekannte Anordnung mit vier elastischen Schwenklagern.

Was die Gestaltung und Anordnung der jeweils im wesentlichen biegesteifen jedoch torsionsweichen Stützelemente in Form von Längsprofilen, d.h. von Profilstäben mit jeweils geeignetem Profilquerschnitt betrifft, so sind die oberhalb des Radmittelpunktes angeordneten Stützelemente und die unterhalb des Radmittelpunktes angeordneten Stützelemente vorzugsweise derart zu gestalten und anzuordnen, dass in Fahrzeug-Querrichtung betrachtet die Schubmittelpunkte der oberen Stützelemente signifikant näher an der Mitte des Fahrzeugs bzw. der Achse liegen als die Schubmittelpunkte der unteren Stützelemente. In anderen Worten ausgedrückt bedeutet dies, dass der Schubmittelpunkt jedes oberhalb des Radmittelpunktes liegenden Stützelements in Fahrzeug-Querrichtung betrachtet nennenswert vom Schubmittelpunkt jedes unterhalb des Radmittelpunktes liegenden Stützelements beabstandet ist. Bekanntlich handelt es sich beim Schubmittelpunkt (auch Querkraftmittelpunkt oder Drillruhepunkt genannt) eines Profilquerschnitts um denjenigen Punkt, durch den die Resultierende der am Profilquerschnitt angreifenden Querkräfte gehen muss, wenn eine verdrehungsfreie Krafteinwirkung erreicht und somit keine Torsion auf diesen Profilquerschnitt ausgeübt werden soll.

Ein bevorzugter Profilquerschnitt, mit welchem eine entsprechende Lage der Schubmittelpunkte, durch welche letztlich die Lage der virtuellen Spreizachse des Radträgers im Raume mit festgelegt wird, gut realisiert werden kann, ist durch ein im wesentlichen U-förmiges Profil gebildet, dessen Schubmittelpunkt bekanntlich außerhalb des Profilquerschnitts unterhalb der Basis des Profils liegt. Bei Verwendung von im Querschnitt im wesentlichen U-förmigen Profilstäben für die Stützelemente empfiehlt es sich daher, die beiden oberhalb des Radmittelpunktes angeordneten Stützelemente, zumindest jedoch das obere sog. Torsions-Stützelement derart anzuordnen, dass sich die beiden Schenkel in Fzg.-Querrichtung erstrecken und die Profil-Basis der Mitte des Fahrzeugs zugewandt ist, d.h. dass das Profil zum Rade hin offen ist. Hingegen sollten die beiden unterhalb des Radmittelpunktes angeordneten Stützelemente, zumindest jedoch das untere sog. Torsions-Stützelement derart angeordnet werden, dass sich die beiden Schenkel in Fzg.-Querrichtung erstrecken und die Profil-Basis der Außenseite des Fahrzeugs zugewandt ist, d.h. dass das Profil zur Fahrzeug-Mitte hin offen ist. Dabei sei ausdrücklich darauf hingewiesen, dass keineswegs die Verwendung von U-Profilen zur Erzielung des erfindungsgemäßen Effekts erforderlich ist, wenngleich damit beste Ergebnisse erreichbar sind. Alternativ sind für die Stützelemente auch im Querschnitt halbkreisförmige Profile oder Profilstäbe bzw. Längsprofile mit T- oder L- oder X-Querschnitt oder anderen geeigneten Querschnitten verwendbar. (Auf diese vorhergehenden Ausführungen zu den Schubmittelpunkten der einzelnen Stützelemente wird an späterer Stelle in der Figurenbeschreibung eines Ausführungsbeispiel unter dem Begriff "Schubmittelpunktstheorie" Bezug genommen).

Bei Betrachtung in Fahrzeug-Längsrichtung wird die virtuelle Spreizachse im wesentlichen durch die beiden Torsions-Stützelemente definiert und kann - abhängig vom für diese bzw. für sämtliche Stützelemente gewählten Profilquerschnitt im wesentlichen in Richtung des oberen und des unteren Torsions-Stützelements verlaufen. Vorzugsweise sind diese (sowie die virtuelle Spreizachse) in der Fahrzeug-Querebene im wesentlichen gleichartig derart gegenüber der Vertikalen geneigt, dass ein negativer Lenkrollradius - zur Erzielung von dessen grundsätzlich bekannten Vorteilen - gebildet ist. Insbesondere kann mit einem solchen negativen Lenkrollradius bei Bremsvorgängen und somit unter Längskrafteinfluss ebenfalls ein gewünschtes In-Vorspur-Gehen des Rades erzeugt werden, d.h. das Rad bzw. der Radträger um die virtuelle Spreizachse in Vorspur verschwenkt werden.

Neben den besagten vier Stützelementen kann der Radträger über zumindest ein weiteres eine gewisse Weichheit aufweisendes Verbindungselement abseits der Spreizachse abgestützt sein, vorzugsweise abermals am genannten Achskörper. Diese Weichheit erlaubt dem Radträger die gewünschte Verschwenkbewegung um die virtuelle Spreizachse, wobei dieses Verbindungselement auf die Intensität dieser Verschwenkbewegung Einfluss nehmen und diese insbesondere auch bedämpfen-kann. Beispielsweise kann als derartiges Verbindungselement ein in axialer Richtung weiches Gummilager zum Einsatz kommen, wobei die axiale Richtung tangential zur Drehrichtung des Radträgers um die virtuelle Spreizachse verläuft. Damit lässt sich also die Verdrehweichheit um die Spreizachse einstellen und somit auch das elastokinematische Vorspurlenkverhalten der Achse. Wie bereits erwähnt kann ein solches eine gewisse Weichheit aufweisendes Verbindungselement insbesondere Torsionsschwingungen um die virtuelle Spreizachse bedämpfen und darüber hinaus das Aufziehen der Achse bei Bremsvorgängen reduzieren. Zusätzlich kann ein derartiges Verbindungselement Kräfte beim Einfedern des Rades übertragen. Vorteilhafterweise kann an dieser Stelle auch die Spureinstellung der Achse durchgeführt werden. Es sei nochmals ausdrücklich darauf hingewiesen, dass als derartiges Verbindungselement nicht zwangsläufig ein Gummilager verwendet werden muss, sondern dass dieses Verbindungselement auch durch ein geeignetes Strukturbauteil gebildet sein kann, welches die besagte "Weichheit" in oben beschriebener Richtung aufweist.

Im weiteren wird die Erfindung anhand eines in den beigefügten Prinzipskizzen dargestellten Ausführungsbeispieles weiter erläutert. Dabei zeigt
- Figur 1: eine räumliche Ansicht einer erfindungsgemäßen Achse bei Betrachtung von schräg links vorne
- Figur 2: den Bereich des linksseitigen Radträgers (mit Stützelementen) aus Figur 1 in vergrößerten Darstellung
- Figur 3: eine räumliche Ansicht des Radträgers aus Figur 2 (mit Stützelementen) von schräg innen hinten
- Figur 4: die Seitenansicht des Radträgers (mit Stützelementen) aus Figur 2
- Figur 5: die Ansicht des Radträgers (mit Stützelementen) aus Figur 2 in Fahrtrichtung betrachtet von hinten
- Figur 6: den Schnitt A-A aus Figur 5
- Figur 7: den Schnitt B-B aus Figur 5

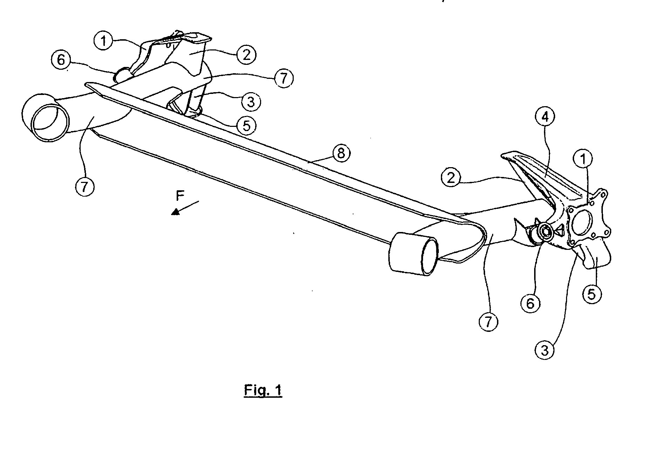

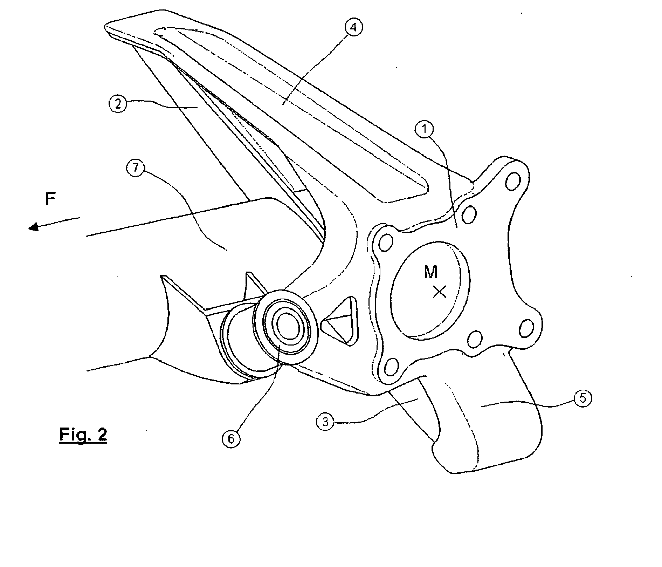

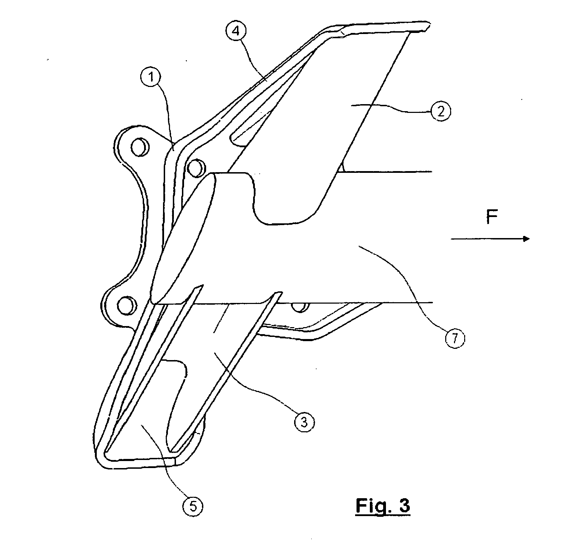

Zunächst auf die Figuren 1 - 3 Bezug nehmend ist mit der Bezugsziffer 1 der Radträger einer Fahrzeug-Hinterachse gekennzeichnet, bei welcher es sich beispielsweise - wie vorliegend dargestellt - um eine dem Fachmann in ihrem Aufbau grundsätzlich bekannte sog. Verbundlenkerachse handeln kann. Diese weist für jedes Rad, d.h. linksseitig und rechtsseitig jeweils einen sich im wesentlichen in Fahrzeug-Längsrichtung erstreckenden sog. Achskörper 7 (hier in Form eines Längsrohres) auf, wobei beide Achskörper 7 über ein sich in Fahrzeug-Querrichtung erstreckendes biegesteifes aber torsionsweiches Verbundprofil 8 miteinander verbunden sind.

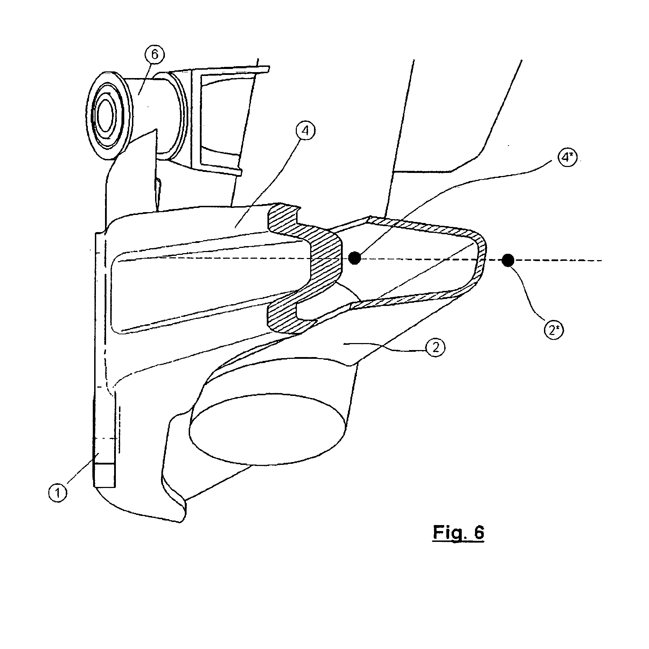

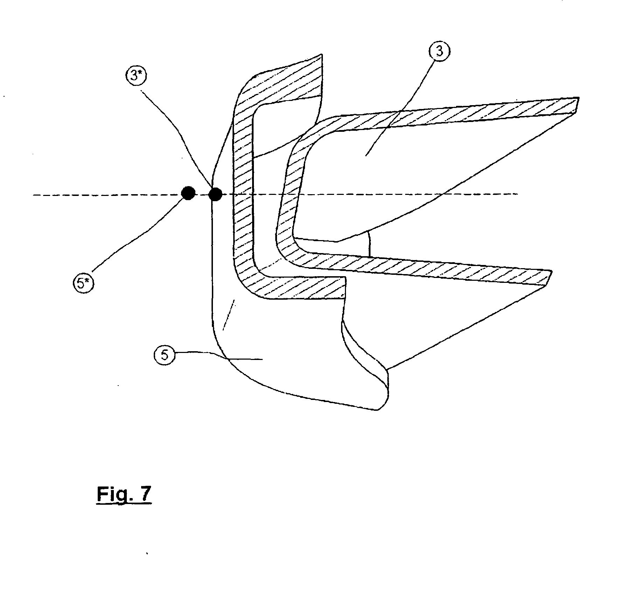

Jeder Radträger 1 ist an dem ihm zugeordneten Achskörper 7 über zumindest vier Stützelemente 2, 3, 4, 5 abgestützt, bei denen es sich um im wesentlichen biegesteife aber torsionsweiche Längsprofile oder Profilstäbe mit hier im wesentlichen U-förmigem Profilquerschnitt handelt (vgl. hierzu die noch an späterer Stelle erläuterten Figuren 6, 7). Vorliegend ist der Radträger darüber hinaus über ein weiteres Verbindungselement 6 am Achskörper 7 abgestützt, welches jedoch nicht zwingend erforderlich ist.

Ein mit der Bezugsziffer 4 gekennzeichnetes oberes, da oberhalb des Radmittelpunktes M (bzw. Mittelpunktes M des Radträgers 1) liegendes sog. Anbindungs-Stützelement erstreckt sich im wesentlichen in Fahrzeug-Querrichtung und ist einerseits am Radträger 1 und andererseits an einem oberen Torsions-Stützelement 2, das mit seinem anderen Ende am Achskörper 7 abgestützt bzw. fest mit dem Achskörper 7 verbunden ist, abgestützt bzw. fest mit dem Torsions-Stützelement 2 verbunden. Ein unteres, da unterhalb des Radmittelpunktes M liegendes Anbindungs-Stützelement 5 erstreckt sich im wesentlichen in Vertikalrichtung und ist einerseits am Radträger 1 und andererseits an einem unteren Torsions-Stützelement 3, das mit seinem anderen Ende am Achskörper 7 abgestützt bzw. fest mit dem Achskörper 7 verbunden ist, abgestützt bzw. fest mit dem Torsions-Stützelement 3 verbunden. Dabei sei ausdrücklich darauf hingewiesen, dass das Anbindungs-Stützelement 4 und/oder das Anbindungs-Stützelement 5 durchaus integraler Bestandteil des Radträgers 1 sein kann.

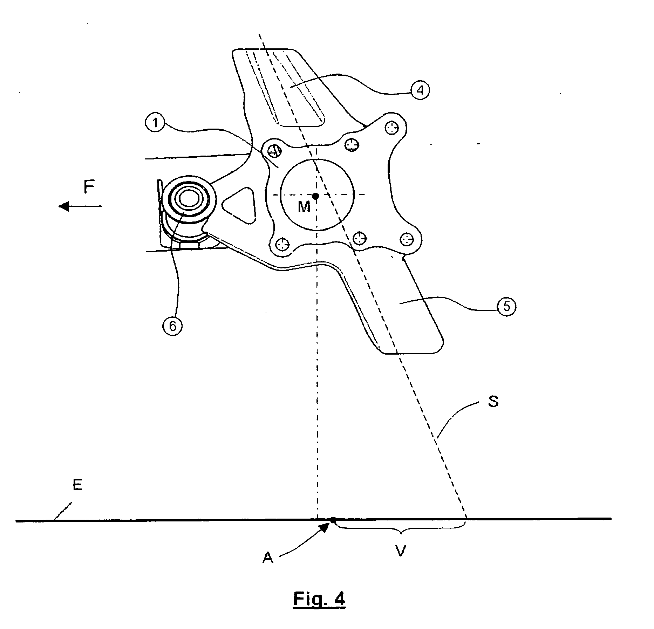

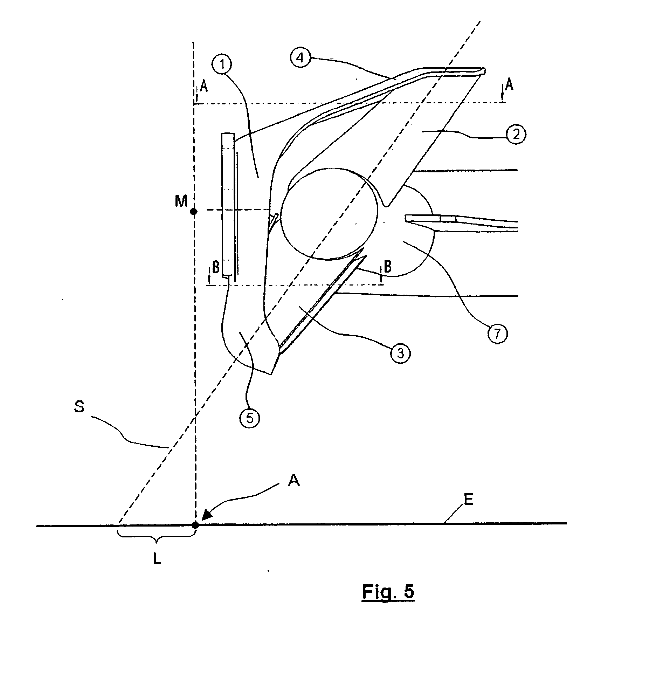

Unter Bezugnahme auf die vor dieser Figurenbeschreibung erläuterte sog. "Schubmittelpunktstheorie" definiert das obere Torsions-Stützelement 2 zusammen mit dem hiermit quasi in Reihe geschalteten Anbindungs-Stützelement 4 zumindest einen in Vertikalrichtung betrachtet oberen Punkt einer durch die im wesentlichen biegesteifen aber torsionsweichen Stützelemente 2, 3, 4, 5 gebildeten und in den **Figuren 4** **und** **5** dargestellten virtuellen Spreizachse S, um welche der Radträger 1 bzw. das an diesem befestigte figürlich nicht dargestellte Rad unter auf dieses Rad einwirkendem Seitenkrafteinfluss geringfügig in Vorspur (wenn es sich um das kurvenäußere Rad handelt) bzw. in Richtung Nachspur (wenn es sich um das kurveninnere Rad handelt) verschwenkt wird bzw. werden kann. In analoger Weise definiert das untere Torsions-Stützelement 3 zusammen mit diesem in Reihe geschalteten Anbindungs-Stützelement 5 zumindest einen unteren Punkt dieser virtuellen Spreizachse S. In diesem Zusammenhang sei darauf hingewiesen, dass durch die konstruktive Hintereinanderschaltung des jeweiligen Torsions-Stützelementes 3 bzw. 5 und des jeweiligen Anbindungs-Stützelementes 2 bzw. 4 eine vorteilhafte eine Reihenschaltung der jeweiligen Torsionssteifigkeiten gebildet wird, wodurch die gesamte Torsionssteifigkeit in gewünschter Weise reduziert wird. Was die Biegesteifigkeit der einzelnen Stützelemente 2 - 5 betrifft, so sollte diese jeweils möglichst hoch sein, da sich durch die realisierte Reihenschaltung die Gesamt-Biegesteifigkeit reduziert.

Wie **Figur 4**, in der die Fahrtrichtung des Fahrzeugs durch einen Pfeil F dargestellt ist, zeigt, wird durch die Anordnung der vier Stützelemente 2, 3, 4 und 5 in gleichartiger Neigung gegenüber der Vertikalen in Seitenansicht die Projektion einer bzw. der (virtuellen) Spreizachse S in der Seitenansicht definiert. Damit ergibt sich in der Radaufstandsebene E betrachtet eine Vorlaufstrecke V gegenüber dem Rad-Aufstandspunkt A, welche bei einer auf das hier kurvenäußere Rad in dieser Figurendarstellung senkrecht zur Zeichenebene einwirkender Seitenkraft ein Vorspurlenken und somit ein untersteuerndes, stabilisierendes Fahrzeug-Verhalten bewirkt. Wie **Figur 5** zeigt wird in Fahrzeug-Längsrichtung betrachtet die virtuelle Spreizachse S im wesentlichen durch die beiden Torsions-Stützelemente 2, 3 definiert und kann - abhängig vom für diese bzw. für sämtliche Stützelemente 2, 3, 4, 5 gewählten Profilquerschnitt im wesentlichen in Richtung des oberen und des unteren Torsions-Stützelements 2 bzw. 3 verlaufen. Dabei sind diese sowie die virtuelle Spreizachse S im wesentlichen gleichartig derart geneigt, dass ein negativer Lenkrollradius L - zur Erzielung von dessen grundsätzlich bekannten Vorteilen - gebildet ist. Wie **Figur 6** zeigt sind hierfür die beiden oberhalb des Radmittelpunktes M liegenden Stützelemente 2 und 4 so ausgeführt, dass deren Schubmittelpunkte 2* bzw. 4* in Fahrzeug-Querrichtung betrachtet signifikant näher bei der (in Figur 6 rechtsseitig liegenden) Mitte des Fahrzeugs liegen, als die in **Figur 7** gezeigten Schubmittelpunkte 3* bzw. 5* der unterhalb des Radmittelpunktes M liegenden Stützelemente 3 und 5. Die gewünschte virtuelle Spreizachse könnte dabei äußerst exakt erzeugt werden, wenn die Schubmittelpunkte sämtlicher Stützelemente 2, 3, 4, 5 auf einer geraden Linie lägen, jedoch wird dies in der Realität nicht vollständig umsetzbar sein. Bei Verwendung U-förmiger Profile für die Stützelemente 2 - 5 können diese jedoch - wie vorliegend bei den beiden Stützelementen 3 und 5 realisiert - ineinander verschachtelt angeordnet sein, so dass das o.g. Kriterium relativ gut erfüllt werden kann.

Ein (bereits genannter) in Vertikalrichtung oberer Punkt der Spreizachse S ergibt sich somit direkt oder indirekt aus den (oberen) Schubmittelpunkten 2* und 4* der oberen Stützelemente 2 und 4 und wird somit in Fahrzeug-Querrichtung betrachtet näher zur Fahrzeugmitte hin (in Figur 6 rechtsseitig) gelegt, als ein (bereits genannter) unterer Punkt der Spreizachse, der sich direkt oder indirekt aus den (unteren) Schubmittelpunkten 3* und 5* der unteren Stützelemente 3 und 5 ergibt und bevorzugt so positioniert wird, dass dieser in Fahrzeug-Querrichtung betrachtet möglichst weit außen (in Figur 7 linksseitig) liegt. In entsprechender Weise sind die Stützelemente 2, 3, 4, 5 ausgeführt, d.h. hier im Falle von im Querschnitt im wesentlichen U-förmigen Profilquerschnitten (mit zwischen zwei Schenkeln liegender Basis) der Stützelemente 2, 3, 4, 5 weist die Basis der oberen Stützelemente 2 und 4 in Fzg.-Querrichtung betrachtet nach innen zur Fahrzeug-Mitte hin, während die Basis der unteren Stützelemente 3, 5 in Fahrzeug-Querrichtung betrachtet der Fahrzeug-Außenseite zugewandt ist. Werden beispielsweise die unteren Schubmittelpunkte 3*, 5* weiter nach außen (= in der Figur 7 nach links) gelegt , so wandert auch der untere Spreizachspunkt weiter nach außen und der Lenkrollradius L nimmt in Richtung "negativ" zu, was beim Bremsen einen stärkeren untersteuernden Effekt hat. Im übrigen kann auch durch eine Variation der Wandstärken der Stützelemente 2, 3, 4, 5 deren Torsionssteifigkeit bzw. Torsions-Weichheit und somit der mit einer erfindungsgemäßen Achse erzielbare untersteuernde Effekt verändert werden, falls dies die Betriebsfestigkeitsanforderung der Bauteile zulässt.

In den **Figuren 1****,** **2** **und** **4** erkennt man ein bereits kurz angesprochenes weiteres Verbindungselement 6 hier in Form eines Gummilagers, welches in axialer Richtung - diese verläuft in Figur 4 im wesentlichen senkrecht zur Zeichenebene - eine gewisse Weichheit aufweist, und über welches der Radträger 1 abseits der virtuellen Spreizachse S zusätzlich am Achskörper 7 abgestützt ist. Mit dieser weichen Abstützung kann die insbesondere unter Seitenkrafteinfluss, in Abhängigkeit vom Lenkrollradius jedoch auch unter Längskrafteinfluss erfolgende Verschwenkbewegung des Radträgers 1 um die. Spreizachse S in gewünschter Weise eingestellt und insbesondere auch bedämpft werden. Die weiteren Vorteile eines solchen Verbindungselements 6 wurden vor der Beschreibung dieses Ausführungsbeispiels erläutert.

Eine erfindungsgemäße Hinterachs-Konstruktion eignet sich insbesondere für Verbundlenkerachsen oder Längslenkerachsen oder Schräglenkerachsen oder Starrachsen, bzw. für sämtliche Achsen, welche insbesondere bei Seitenkraft, ggf. auch bei Längskraft ungewollt "in Nachspur gehen". Häuptmerkmal ist, dass durch torsionsweiche Bauteile, nämlich durch die hier sog. Stützelemente 2, 3, 4, 5 eine virtuelle Spreizachse S gebildet ist, deren Schnittpunkt mit der Radaufstandsebene E in Fahrtrichtung F betrachtet hinter dem Radaufstandpunkt liegt (vgl. Fig.4) und vorzugsweise zusätzlich in Fahrzeug-Querrichtung betrachtet außerhalb des Radaufstandspunktes A liegt (vgl. Fig.5), so dass sich eine Vorlaufstrecke V und mit dem zusätzlichen Kriterium vorteilhafterweise ein negativer Lenkrollradius L ergibt. Zur Erzielung dieser fahrdynamisch positiven Eigenschaften werden im einfachsten Fall keine weiteren Gummilager oder Kugelgelenke benötigt, gegebenenfalls lediglich das hier gezeigte weitere Verbindungselement 6, so dass eine einfache und kostengünstige Achskonstruktion vorliegt, wobei noch darauf hingewiesen sei, dass durchaus eine Vielzahl von Details abweichend von obigen Erläuterungen gestaltet sein kann, ohne den Inhalt der Patentansprüche zu verlassen. So können anstelle der hier für die Stützelemente 2, 3, 4, 5 verwendeten annähernd rechteckigen U-förmigen Torsionsprofile, die oberhalb Radmitte M zur Fahrzeugmitte hin geschlossen und unterhalb der Radmitte M zur Fahrzeugmitte hin offen sind, auch andere geeignete Profilquerschnitte verwendet werden, beispielsweise dünnwandige runde, geschlitzte Profile oder T-Profile, L-Profile oder X-Profile. Mit den vorliegend ausgewählten im Querschnitt im wesentlichen U-förmigen Profilstäben für die besagten Stützelemente 2, 3, 4, 5 jedenfalls ergeben sich die oben erläuterten Schubmittelpunkte (2*, 3*, 4*, 5*) sowie die gewünschte virtuelle Spreizachse S. Vorteilhafterweise weisen die hier gewählten Profilquerschnitte eine sehr hohe Biegesteifigkeit auf, woraus eine hohe Sturzsteifigkeit des Radträgers 1 resultiert. Ferner kann insbesondere der Achskörper 7 im Bereich der durch den Radmittelpunkt M verlaufenden Radachse aufgeweitet sein, um einen Durchgang für eine Abtriebswelle zu schaffen, so dass eine erfindungsgemäße Hinterachse durchaus auch angetrieben werden kann.

## Patentansprüche

1. Gegenlenkende Fahrzeug-Hinterachse, die unter Einwirkung einer Seitenkraft auf das an einem Radträger (1) befestigte kurvenäußere Rad eine Drehbewegung dieses Radträgers (1) um eine virtuelle Spreizachse (S) in Richtung Vorspur veranlasst, wobei der Radträger (1) über Stützelemente (2, 3, 4, 5) an einem sich im wesentlichen in Fahrzeug-Längsrichtung erstreckenden Achskörper (7) abgestützt ist, **dadurch gekennzeichnet, dass** oberhalb und unterhalb des Radmittelpunktes (M) jeweils zwei torsionsweiche, aber biegesteife Stützelemente (2, 3, 4, 5) vorgesehen sind, die in einer seitlichen Projektion wie die virtuelle Spreizachse (S) im wesentlichen gleichermaßen gegenüber der Vertikalrichtung geneigt sind,
wobei ein oberes, sich im wesentlichen in Fahrzeug-Querrichtung nach innen erstreckendes Anbindungs-Stützelement (4) einerseits am Radträger (1) und andererseits an einem oberen Torsions-Stützelement (2), das mit seinem anderen Ende am Achskörper (7) abgestützt ist, abgestützt ist,
während ein unteres, sich im wesentlichen in Vertikalrichtung erstreckendes Anbindungs-Stützelement (5) einerseits am Radträger (1) und andererseits an einem unteren Torsions-Stützelement (3), das mit seinem anderen Ende am Achskörper (7) abgestützt ist, abgestützt ist.

2. Fahrzeug-Hinterachse nach Anspruch 1,
**dadurch gekennzeichnet, dass** die oberhalb des Radmittelpunktes (M) angeordneten Stützelemente (2, 4) und die unterhalb des Radmittelpunktes (M) angeordneten Stützelemente (3, 5) derart angeordnet und in Form von vorzugsweise im Querschnitt im wesentlichen u-förmigen Längsprofilen gestaltet sind, dass in Fahrzeug-Querrichtung betrachtet die oberen Schubmittelpunkte (2*, 4*) der oberen Stützelemente (2, 4) signifikant näher an der Achs-Mitte liegen als die unteren Schubmittelpunkte (3*, 5*) der unteren Stützelemente (3, 5).

3. Fahrzeug-Hinterachse nach Anspruch 1 oder 2,
**dadurch gekennzeichnet, dass** in Fahrzeug-Längsrichtung betrachtet die die virtuelle Spreizachse (S) beschreibenden oberen und unteren Torsions-Stützelemente (2, 3) im wesentlichen gleichartig derart gegenüber der Vertikalen geneigt sind, dass ein negativer Lenkrollradius gebildet ist.

4. Fahrzeug-Hinterachse nach einem der vorangegangenen Ansprüche,
**dadurch gekennzeichnet, dass** der Radträger (1) abseits der Spreizachse (S) über ein zusätzliches eine gewisse Weichheit aufweisendes Verbindungselement (6) am Achskörper (7) abgestützt ist.

## Claims

1. A counter-steering vehicle rear axle, which under the action of a lateral force on the wheel on the outside during cornering, which is fastened to a wheel carrier (1), causes a rotational movement of this wheel carrier (1) about a virtual axis (S) of spread in the toe-in direction, wherein the wheel carrier (1) is supported by means of support elements (2, 3, 4, 5) on an axle body (7) extending substantially in the longitudinal direction of the vehicle, **characterised in that** provided above and below the wheel centre point (M) are, respectively, two torsionally soft but bend-resistant support elements (2, 3, 4, 5), which are inclined in a lateral projection substantially to the same extent as the virtual axis (S) of spread relative to the vertical direction, wherein an upper linkage support element (4) extending inwardly substantially in the transverse direction of the vehicle is supported, on the one hand, on the wheel carrier (1) and, on the other hand, on an upper torsion support element (2), which is supported by its other end on the axle body (7), while a lower linkage support element (5) extending substantially in the vertical direction is supported, on the one hand, on the wheel carrier (1) and, on the other hand, on a lower torsion support element (3), which is supported by its other end on the axle body (7).

2. A vehicle rear axle according to claim 1, **characterised in that** the support elements (2, 4) arranged above the wheel centre point (M) and the support elements (3, 5) arranged below the wheel centre point (M) are arranged and designed in the form of longitudinal profiles that are preferably substantially U-shdped in cross-section in such a way that, viewed in the transverse direction of the vehicle, the upper thrust centre points (2*, 4*) of the upper support elements (2, 4) are located significantly closer to the axle centre than the lower thrust centre points (3*, 5*) of the lower support elements (3, 5).

3. A vehicle rear axle according to claim 1 or 2, **characterised in that**, viewed in the longitudinal direction of the vehicle, the upper and lower torsion support elements (2, 3) describing the virtual axis (S) of spread are inclined substantially in the same manner relative to the vertical such that a negative scrub radius is formed.

4. A vehicle rear axle according to any one of the preceding claims, **characterised in that** the wheel carrier (1) away from the axis (S) of spread is supported on the axle body (7) by means of an additional connecting element (6) having a certain softness.

## Revendications

1. Essieu arrière de véhicule à contre braquage, qui autorise, sous l'action d'une force latérale s'exerçant sur la roue située à l'extérieur du virage fixée à un support de roue (1) un mouvement de rotation de ce support de roue (1) autour d'un axe d'écartement virtuel (S) en direction de parallélisme, le support de roue (1) s'appuyant par l'intermédiaire d'éléments d'appui (2, 3, 4, 5) contre un corps d'essieu (7) s'étendant essentiellement dans la direction longitudinale du véhicule,
**caractérisé en ce qu'**
en dessus et en dessous du centre de la roue (M) il est respectivement prévu deux éléments d'appui (2, 3, 4, 5) souples en torsion mais rigides en flexion qui sont inclinées essentiellement de la même manière par rapport à la direction verticale, en projection latérale, et que l'axe d'écartement virtuel (S),
un élément d'appui et de liaison (4) supérieur s'étendant vers l'intérieur essentiellement dans la direction transversale du véhicule s'appuie d'une part sur le support de roue (1) et d'autre part sur un élément d'appui et de torsion supérieur (2) qui s'appuie par son autre extrémité sur le corps d'essieu (7),
tandis qu'un élément d'appui et de liaison inférieur (5) s'étendant essentiellement en direction verticale s'appuie d'une part sur le support de roue (1) et d'autre part sur un élément d'appui et de torsion inférieur (3) qui s'appuie par son autre extrémité sur le corps d'essieu (7).

2. Essieu arrière de véhicule conforme à la revendication 1,
**caractérisé en ce que**
les éléments d'appui (2, 4) situés au-dessus du centre (M) de la roue et les éléments d'appui (3, 5) situés au-dessous du centre (M) de la roue sont montés et réalisés sous forme de profilés longitudinaux de préférence à section essentiellement en forme de U, de sorte que, considéré dans la direction transversale du véhicule, les centres de cisaillement supérieurs (2', 4') des éléments d'appui supérieurs (2, 4) soient notablement plus proches du milieu de l'essieu que les centres de cisaillement inférieurs (3', 5') des éléments d'appui inférieurs (3, 5).

3. Essieu arrière de véhicule conforme à la revendication 1 ou 2,
**caractérisé en ce que**
considéré dans la direction longitudinale du véhicule, les éléments d'appui et de torsion (2, 3) supérieur et inférieur qui décrivent l'axe d'écartement virtuel (S) sont essentiellement inclinés de la même manière par rapport à la verticale de façon à former un départ au sol négatif.

4. Essieu arrière de véhicule conforme à l'une des revendications précédentes,
**caractérisé en ce que**
le support de roues (1) s'appuie contre le corps d'essieu (7) en dehors de l'axe d'écartement (S) par l'intermédiaire d'un élément de liaison supplémentaire (6) présentant une mollesse définie.
